Europäisches Patentamt

**European Patent Office**

Office européen des brevets

(19)

(11) Numéro de publication: **0 045 706**
**B1**

(12)

# FASCICULE DE BREVET EUROPEEN

(45) Date de publication du fascicule du brevet:
**23.10.85**

(21) Numéro de dépôt: **81420110.9**

(22) Date de dépôt: **23.07.81**

(51) Int. Cl.⁴: **B 22 F 3/10**, C 22 C 33/02,
B 22 F 3/26, F 16 C 33/14

(54) **Pièce frittée à base de fer et son procédé de fabrication.**

(30) Priorité: **25.07.80 FR 8016752**

(43) Date de publication de la demande:
**10.02.82 Bulletin 82/6**

(45) Mention de la délivrance du brevet:
**23.10.85 Bulletin 85/43**

(84) Etats contractants désignés:
**AT CH DE GB LI NL SE**

(56) Documents cités:
**DE - B - 1 188 821**
**DE - C - 851 440**
**FR - A - 1 562 478**
**FR - A - 2 289 281**
**FR - A - 2 410 524**
**GB - A - 321 394**

**G.C.Pratt "A review of sintered metal bearings their
production, properties and performances", POWDER
METALLURGY 1969, vol. 12, no. 24, pp. 350-385**

(73) Titulaire: **Alliages Frittés METAFRAM, Tour
Manhattan 6, Place de l'Iris, F-92400 Courbevoie (FR)**

(72) Inventeur: **Pleney, Louis, 6, place Gustave Rivet,
F-38000 Grenoble (FR)**

(74) Mandataire: **Séraphin, Léon et al, PECHINEY 28, rue de
Bonnel, F-69433 Lyon Cedex 3 (FR)**

## Description

L'invention est relative à un corps fritté obtenu à partir de poudres, dont le constituant principal est de la poudre de fer et/ou d'acier, et à son procédé de fabrication; elle permet d'obtenir des pièces de grande précision dimensionnelle, principalement destinées à subir des frottements.

On sait que la méthode classique de fabrication de telles pièces par métallurgie des poudres comporte, en général, les opérations suivantes:

— mélange de poudres initiales
— compression à froid
— frittage à chaud sous gaz protecteur (ou sous vide)
— calibrage par compression à froid
— éventuellement, imprégnation sous vide par un lubrifiant liquide (ou pâteux)

Les opérations de frittage ayant lieu à haute température (900° à 1200°C env.), il en résulte des variations dimensionnelles et des distorsions des pièces frittées, ce qui impose un calibrage à froid pour leur rendre la précision géométrique et la rugosité obtenue après compression à froid (respectivement indice 6 suivant la norme française NF 02-102 de Mai 1965 et rugosité R de 1 à 2 μm suivant le projet de norme française NF 05-015 de Juillet 1969).

La demande de brevet GB-A-321 394 décrit un procédé différent de fabrication de pièces frittées, à partir de poudres d'oxydes métalliques auxquelles est mélangé du métal finement divisé, par exemple de la poudre de fer, qui s'oxyde lors d'un chauffage en atmosphère non réductrice entre 200 et 1000°C, et de préférence entre 500 et 800°C, en produisant le frittage des particules d'oxyde préexistantes. Ce procédé est utilisé pour fabriquer des pièces poreuses et en particulier des filtres, il ne concerne pas des pièces frittées de grande précision dimensionnelle, principalement destinées à subir des frottements.

Par le brevet DE-C-851 440, il est, par ailleurs, connu de traiter des des pièces de fer ou d'acier préalablement frittées par de la vapeur d'eau surchauffée entre 170 et 300°C au lieu de 600°C environ, température utilisée antérieurement. Ce traitement entraîne la formation de couches d'oxyde FE₃O₄ ou d'oxyde hydraté à la surface des pores.

Dans la présente invention, la demanderesse a trouvé qu'il était possible d'obtenir des pièces principalement destinées à subir des frottements en conservant la géométrie et la rugosité obtenues après compression à froid, en appliquant la méthode suivante:

— mélange des poudres initiales, celles-ci étant constituées de poudres de fer et/ou d'acier, à l'exclusion des aciers inoxydables ou réfractaires, lesdites poudres étant éventuellement additionnées d'un lubrifiant de compression et/ou d'un lubrifiant solide en poudre
— compression à froid
— oxydation à tiède
— éventuellement, imprégnation sous vide d'un lubrifiant liquide ou pâteux.

L'oxydation est effectuée dans un milieu tel que l'eau pressurisée, la vapeur d'eau surchauffée, l'air, l'oxygène, le gaz carbonique, ou leurs mélanges éventuellement complété(s) par un gaz inerte, dans le domaine suivant:

$200° \leq$ température $\leq 600°C$
$10$ mn $\leq$ durée $\leq 10$ heures

de manière à développer à la surface des grains de fer et/ou d'acier une couche d'oxyde pouvant aller jusqu'à 15 μm d'épaisseur.

Les grains en contact sont alors liés les uns aux autres par des ponts d'oxyde de fer (dont le constituant principal est l'oxyde magnétique $Fe_3O_4$) qui assurent à l'ensemble de la pièce un niveau de caractéristiques mécaniques suffisant pour son utilisation.

Il est possible, en faisant varier les conditions d'oxydation, et pour un spectre granulométrique initial donné, de faire varier la densité et la porosité du produit obtenu, cette dernière pouvant être ouverte ou fermée. La porosité fermée est obtenue pour les durées d'oxydation les plus longues et/ou les températures les plus élevées.

Dans le cas où la porosité est ouverte, celle-ci occupe moins de 30% en volume, et la pièce peut alors recevoir un imprégnant quelconque sous vide (huile en particulier), cet imprégnant conférant à la pièce des propriétés d'auto-lubrification (par exemple pour des coussinets).

Dans le cas contraire, où la porosité de la pièce est fermée, celle-ci est étanche aux fluides (liquides et gaz), ce qui peut être avantageux dans certaines applications.

De plus, la présence de la couche d'oxyde superficiel ($Fe_3O_4$) sur la surface extérieure de la pièce en abaisse le coefficient de frottement dans un couple de frottement où l'antagoniste est métallique.

Cette méthode d'élaboration permet également l'introduction dans le mélange initial de lubrifiants

2

**0 045 706**

solides les plus divers (graphite, sels de plomb, fluorure de graphite, bisulfure et biséléniure de molybdène, et de W, polytétrafluoréthylène ou ses dérivés, etc...) sans risque de les détruire, dans la mesure où l'oxydation peut être menée à température relativement basse, compatible avec la tenue à chaud du (ou des) lubrifiant(s) solide(s) incorporé(s).

Sous sa forme la plus simple, la méthode suivant l'invention comporte:

— une compression initiale conduisant à une masse spécifique allant de 5,3 à 7,2 g/cm³ (de préférence de 6,1 à 6,3 g/cm³)
— une oxydation
　　— soit à l'air entre 200 et 500°C (de préférence de 300 à 350°C) pour des durées comprises entre 10 min. à 5 heures (de préférence 30 min. à 1 heure)
　　— soit dans la vapeur d'eau surchauffée à 250°—600°C (de préférence entre 450 et 550°C) pendant des durées allant de 10 min. à 10 heures (de préférence 3 à 5 heures).

Dans ce dernier cas, si l'on veut préserver la géométrie initiale de la pièce, il est essentiel d'éliminer au préalable, par chauffage à l'air entre 300 et 400°C, le lubrifiant de compression à froid (généralement constitué par une cire ou un savon métallique, ajouté à raison de 0,3 à 2% en poids des poudres initiales).

Cette méthode apporte donc par rapport à la méthode classique:

— des économies d'énergie et de gaz réducteur
— une simplification de la gamme opératoire par suppression du calibrage à froid
— une diminution des investissements nécessaires à la fabrication
— la possibilité d'introduire des lubrifiants solides dans la structure des pièces en permettant, de ce fait, d'obtenir des matériaux de frottement très performants.

La structure du matériau fritté comporte des grains de fer et/ou d'acier entourés d'une couche d'oxyde de fer (essentiellement $Fe_3O_4$) qui assure la liaison des grains à leurs zones de contact. L'oxyde de fer sert en quelque sorte de »ciment« entre les grains de fer adjacents. Alors que la couche d'oxyde de fer est continue, les grains de fer et/ou d'acier sont discontinus.

Les interstices entre les différents grains sont soit complètement remplis par de l'oxyde, soit constituent une porosité résiduelle (suivant leur taille), cette dernière pouvant contenir un lubrifiant liquide (imprégnation) ou solide (poudre initiale).

Il est également à remarquer que l'oxyde ainsi obtenu possède une structure microporeuse qui favorise la rétention superficielle d'un liquide lubrifiant ou protecteur. Ainsi le matériau trempé dans un de ces liquides résiste très bien au test de corrosion en air humide à chaud suivant la norme française NF C 20-534 (Nov. 74) ($\geq$ 170 heures).

Les figures suivantes représentent:
Figure 1 un schéma de la structure du produit fritté,
Figure 2 un exemple d'application.
Les exemples suivants illustrent les caractéristiques obtenues sur les produits selon l'invention
Les grains de fer (1) sont recouverts d'une couche d'oxyde (2) qui assure au point de contact (3) la liaison entre ceux-ci. Il subsiste entre les grains une porosité résiduelle (4), certains interstices initiaux (5) étant complètement remplis par de l'oxyde de fer.

Exemple 1

Dans les exemples, on est parti d'une poudre de fer ayant une taille moyenne de 100 μm (de 30 à 150 μm), mélangée au mélangeur mécanique avec 1% en poids d'un lubrifiant de compression (de marque ACRAWAX).

Ce mélange a été comprimé à froid sous forme de différentes éprouvettes d'une masse spécifique de 6,2 g/cm³, puis oxydées à l'air à 350° pendant 1 heure. Les échantillons présentent tous une porosité ouverte de 15% en volume.

Les caractéristiques mécaniques obtenues sont:

— résistance à la rupture en compression 500 N/mm² (mesurée sur un cylindre de Ø 10 mm et de hauteur h = 13 mm)
— dureté Brinell (bille de Ø 2,5 mm, charge 1837 N) : 90 (mesurée sur les cylindres précédents)
— résistance à la rupture en flexion 100 N/mm² (mesurée sur éprouvette normalisée: Norme Française NF A95-323 Septembre 1972)
— résistance à la rupture en traction 60 N/mm² (mesurée sur éprouvette normalisée: Norme française NF A95-322 Mai 1971)
— coefficient K de rupture 100 N/mm² (mesurée sur coussinet normalisé: Norme française NF A95—325 Mai 1971)

3

Nous rappelons que le coefficient K d'un coussinet cylindrique est défini de la manière suivante:

$$K = \frac{\text{charge de rupture} \times (\text{Ø extérieur} - \text{épaisseur})}{\text{longueur} \times (\text{épaisseur})^2}$$

## Exemple 2

En partant des mêmes ébauches d'éprouvettes (masse spécifique égale à 6,2 g/cm³) que pour l'exemple 1, mais en les traitant à la vapeur d'eau à 550°C pendant 3 heures, on obtient un matériau présentant les caractéristiques mécaniques suivantes:

— résistance à la rupture en compression: 600 N/mm²
— dureté Brinell (bille Ø 2,5 mm-charge 1837 N): 180—200
— résistance à la rupture en flexion: 180 N/mm²
— résistance à la rupture en traction: 90 N/mm²
— coefficient K de rupture: 180 N/mm²

avec une porosité résiduelle ouverte nulle.

## Exemple 3

Le mélange initial a été comprimé à froid à une masse spécifique de 6,1 g/cm³ sous la forme d'un coussinet cylindrique de dimensions suivantes:

Ø intérieur: 20 mm
Ø extérieur: 25 mm
longueur: 25 mm

Celui-ci a été oxydé à l'air, 1 heure, à 320°C et imprégné sous vide d'une huile minérale de marque SHELL TELLUS S 100 pendant 1 heure. La reprise d'huile a été de 2% pondéral.

Les tolérances dimensionnelles obtenues après ce traitement répondent aux exigences de l'indice 6 de la norme citée, ce qui correspond à 13 μm pour les cotes du coussinet en question. Ce coussinet auto-lubrifié a été essayé dans un palier soumis à une charge radiale de 32 daN à une vitesse de rotation de l'arbre de 6000 t/min. soit dans des conditions correspondant à un PV = 40 daN/cm² X m/sec. avec des cycles successifs de fonctionnement et arrêt (45 sec. + 15 sec. respectivement).

Nous rappelons que le produit PV d'un coussinet est le produit de la pression qui s'exerce sur celui-ci multiplié par la vitesse circonférentielle de l'arbre. La pression P est égale à la force radiale appliquée F/(diamètre de l'arbre X longueur du coussinet); le produit P.V. s'exprime donc en daN/cm² · m/sec.

Le coussinet selon l'invention a duré plus de 500 h sans défaillance alors qu'un coussinet classique en fer fritté grippe très rapidement (quelques minutes) dans les mêmes conditions.

## Exemple 4

On a mélangé au mélangeur mécanique de la poudre de fer (identique à celle de l'exemple 1) avec 3% d'une poudre de bisulfure de molybdène de granulométrie moyenne de l'ordre de 20 μm et 1% de lubrifiant de compression (ACRAWAX).

Ce mélange a été comprimé à froid à une masse spécifique de l'ordre de 6,5 g/cm³ sous la forme d'un coussinet identique en dimensions à celui de l'exemple 3 et oxydé à l'air à 350°C pendant 30 minutes. La porosité résiduelle ouverte est de l'ordre de 5% en volume. Ce coussinet monté à sec (c'est-à-dire sans aucun apport extérieur de lubrifiant et sans aucune imprégnation préalable) a permis de fonctionner à un P.V. de 30 daN/cm² X m/sec. pendant 500 heures sans aucun incident.

## Exemple 5

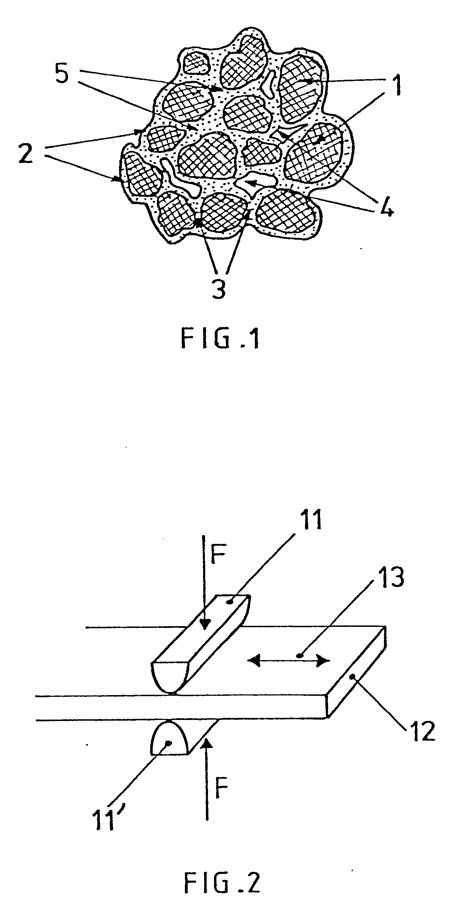

On a réalisé une pièce mécanique servant de patin de glissement dans un montage schématisé figure 2. Cette pièce intervient en deux exemplaires (11) et (11') en frottement sur un antagoniste (12) en acier, animé d'un mouvement horizontal de va et vient (13). Les patins (11) et (11') sont soumis à des efforts verticaux F de quelques centaines de NEWTON.

Les pièces (11) et (11') sont constituées selon l'invention d'un mélange de poudre de fer (indentique à celle de l'exemple 3) additionnée de poudre de MoS₂ (identique à celle de l'exemple 4) en proportion de 3% pondérale; ce mélange a été comprimé à froid à une masse spécifique de 6,5 g/cm$^3$ et oxydé à 350°C à l'air, pendant 2 heures.

Cet ensemble a fonctionné sans difficulté à sec, pendant une durée supérieure à 500 heures.

## Revendications

1. Procédé de fabrication de pièces frittées principalement destinées à subir des frottements, et en particulier de coussinets, à partir de poudres, lequel comporte au moins les opérations suivantes:

a)   mélange à sec des poudres initiales
b)   compression de ces poudres à froid sous forme de pièce(s)
c)   oxydation à tiède de la ou des pièces dans un milieu approprié, réalisant le frittage

caractérisé en ce que les poudres initiales sont constituées de poudres de fer et/ou d'acier, à l'exclusion des aciers inoxydables ou réfractaires, lesdites poudres étant éventuellement additionnées d'un lubrifiant de compression et/ou d'un lubrifiant solide en poudre.

2. Procédé selon la revendication 1, caractérisé en ce que les poudres initiales sont constituées de poudre(s) de fer commercialement pur.

3. Procédé selon l'une quelconque des revendications 1 ou 2, dans le cas où les poudres initiales ne sont pas additionnées d'un lubrifiant solide, caractérisé en ce que, après l'oxydation à tiède, on imprègne sous vide la ou les pièces frittées d'un lubrifiant liquide ou pâteux.

4. Procédé selon l'une quelconque des revendications 1 ou 2, caractérisé en ce que les poudres initales sont additionnées d'un lubrifiant solide en poudre contenant au moins un des constituants choisis dans le groupe: graphite, plomb, sels de plomb, fluorure de graphite, bisulfure de molybdène, biséléniure de tungstène, polytétrafluoréthylène ou ses dérivés.

5. Procédé selon la revendication 2, caractérisé en ce que les poudres initiales sont additionnées de bisulfure de molybdène en poudre.

6. Procédé selon l'une quelconque des revendications 1 à 5, caractérisé en ce que l'oxydation a lieu à l'air entre 200 et 500°C pendant une durée comprise entre 10 minutes et 5 heures.

7. Procédé selon l'une quelconque des revendications 2 ou 5, caractérisé en ce que l'oxydation a lieu à l'air entre 300 et 350°C environ.

8. Procédé selon l'une quelconque des revendications 1 à 5, caractérisé en ce que l'oxydation a lieu dans la vapeur d'eau surchauffée entre 250 et 600°C pendant une durée comprise entre 10 minutes et 10 heures.

## Patentansprüche

1. Verfahren zur Herstellung von Sinterkörpern, die hauptsächlich Reibungen ausgesetzt sein sollen, insbesondere von Lagern, aus Pulvern, das wenigstens die folgenden Schritte umfaßt:

a)   trockenes Mischen der Ausgangspulver,
b)   kaltes Verdichten dieser Pulver in Form eines oder mehrerer Körper,
c)   feuchtes Oxidieren des oder der Körper in einer geeigneten Umgebung, wodurch das Sintern erfolgt,

dadurch gekennzeichnet, daß die Ausgangspulver aus Eisen- und/oder Stahlpulvern bestehen mit Ausnahme von nichtrostenden oder hitzebeständigen Stählen, wobei den Pulvern gegebenenfalls ein Verdichtungsschmiermittel und/oder ein festes pulverförmiges Schmiermittel zugesetzt wird.

2. Verfahren nach Anspruch 1, dadurch gekennzeichnet, daß die Ausgangspulver aus einem oder mehreren handelsüblichen reinen Eisenpulvern bestehen.

3. Verfahren nach einem der Ansprüche 1 oder 2, bei dem den Ausgangspulvern kein festes Schmiermittel zugesetzt wird, dadurch gekennzeichnet, daß nach dem feuchten Oxidieren der oder die Sinterkörper im Vakuum mit einem flüssigen oder pastenförmigen Schmiermittel getränkt werden.

4. Verfahren nach einem der Ansprüche 1 oder 2, dadurch gekennzeichnet, daß den Ausgangspulvern ein festes pulverförmiges Schmiermittel zugesetzt wird, das wenigstens einen der aus der folgenden Gruppe gewählten Bestandteile enthält: Graphit, Blei, Bleisalze, Graphitfluorid, Molybdändisulfid, Wolframdiselenid, Polytetrafluorethylen oder seine Derivate.

5. Verfahren nach Anspruch 2, dadurch gekennzeichnet, daß den Ausgangspulvern pulverförmiges Molybdändisulfid zugesetzt wird.

6. Verfahren nach einem der Ansprüche 1 bis 5, dadurch gekennzeichnet, daß die Oxidation in Luft bei 200 bis 500°C während einer Dauer von 10 Minuten bis 5 Stunden stattfindet.

7. Verfahren nach einem der Ansprüche 2 oder 5, dadurch gekennzeichnet, daß die Oxidation in Luft bei etwa 300 bis 350°C stattfindet.

8. Verfahren nach einem der Ansprüche 1 bis 5, dadurch gekennzeichnet, daß die Oxidation in überhitztem Wasserdampf bei 250 bis 600°C während einer Dauer von 10 Minuten bis 10 Stunden stattfindet.

**Claims**

1. A process for producing sintered parts designed principally to withstand friction, and in particular bearings, from powders, which comprises at least the following operations:

a)  dry blending for the starting powders
b)  cold compression of these powders in piece form
c)  tepid oxidation of the part or parts in a suitable medium, representing the sintering operation,

characterised in that the starting powders are composed of iron and/or steel powders, excluding stainless or refractory steels, said powders possibly being supplemented by a compression lubricant and/or a solid powder-form lubricant.

2. A process according to claim 1, characterised in that the starting powders are composed of commercially pure iron powder(s).

3. A process according to any one of claims 1 or 2, when the starting powders are not supplemented by a lubricant, characterised in that, after tepid oxidation, the sintered part or parts is/are impregnated under vacuum with a liquid or paste-form lubricant.

4. A process according to any one of claims 1 or 2, characterised in that the starting powders are supplemented with a solid powder-form lubricant containing at least one of the constituents from the group comprising graphite, lead, lead salts, graphite fluoride, molybdenum bisulphide, tungsten biselenide, polytetrafluoroethylene or derivatives thereof.

5. A process according to claim 2, characterised in that the starting powders are supplemented by powdered molybdenum bisulphide.

6. A process according to any one of claims 1 to 5, characterised in that oxidation is effected in air at between 200 and 500°C for a period of between 10 minutes and 5 hours.

7. A process according to any one of claims 2 or 5, characterised in that oxidation is effected in air at between about 300 and 350°C.

8. A process according to any one of claims 1 to 5, characterised in that oxidation is effected in water vapour super-heated to between 250 and 600°C for a period of between 10 minutes and 10 hours.

FIG.1

FIG.2